# EUROPEAN PATENT APPLICATION

(11) **EP 2 373 038 A1**
(43) Date of publication of application: **05.10.2011**
(21) Application number: 09834083.9
(22) Date of filing: 21.12.2009
(51) Int. Cl.: H04N 7/58

(54) **METHOD, DEVICE AND SYSTEM FOR IMPLEMENTING MOSAIC TELEVISION SERVICES**

(30) Priority: 22.12.2008 CN 200810186277
(71) Applicant: Huawei Device Co., Ltd., Shenzhen, Guangdong 518129 (CN)
(72) Inventor: CHEN, Juntao, Guangdong 518129 (CN)
(74) Representative: Körber, Martin Hans
(86) International application number: PCT/CN2009/075751
(87) International publication number: WO 2010/072130

(57) **Abstract**

A method, an apparatus and a system for implementing a mosaic TV service are provided in embodiments of the present invention. The application relates to the field of TV technologies, and solves the problem in the prior art that the operability about each small video previewing image is poor. At a front end, a video stream of a TV program of each channel is zoomed out in proportion, to obtain a small video stream corresponding to the TV program of each channel. All the small video streams are multiplexed into at least one mosaic TV service stream to be transmitted to a terminal. The at least one mosaic TV service stream delivered from the front end is obtained at the terminal, from which at least one small video stream is demultiplexed. An image of the small video stream is adjusted to a preset size, and the adjusted small video stream image is displayed.

## Description

This application claims priority to Chinese Patent Application No. 200810186277.2, filed with the Chinese Patent Office on December 22, 2008 and entitled "METHOD, APPARATUS AND SYSTEM FOR IMPLEMENTING MOSAIC TV SERVICE", which is incorporated herein by reference in its entirety.

### FIELD OF THE INVENTION

The present invention relates to the field of TV technologies, and in particular, to a method, an apparatus and a system for implementing a mosaic TV service.

### BACKGROUND OF THE INVENTION

A mosaic TV service divides a screen of a display device into several small areas, and each small area displays a full-motion video of a digital TV program of one channel. A user may select a full-motion video by using a remote control to switch between the areas, so as to watch a standard TV channel linked with the full-motion video. Compared with an Electronic Program Guide (EPG) for transmitting text information, the mosaic TV service is capable of providing program previews of the TV channels for the users, thus achieving better interactivity and user friendliness.

In a mosaic TV service in accordance with a Digital Video Broadcasting (DVB) standard, first a complex mosaic TV generator is required to be configured at an operator front end. The mosaic TV generator zooms out a plurality of standard videos into small video preview images, re-integrate the plurality of small video preview images into a standard TV image, and transmit the integrated standard TV image as a complete video stream to a terminal (generally, the small video streams of 4 to 6 channels are transmitted as a whole to the terminal through one channel). The video stream corresponding to the integrated standard TV image is called a "mosaic TV service stream".

In the implementation of the above mosaic TV service in accordance with the DVB standard, the inventor found that the prior art has at least the following problems. Though the standard TV image is composed by a plurality of small video preview images, since the small video preview images in the standard TV image cannot be divided after the processing of the mosaic TV generator, when the terminal navigates by using the mosaic TV service stream, each small video preview image in the standard TV image cannot be respectively managed, thus causing poor operability of the terminal and failing to bring good experience to the user.

### SUMMARY OF THE INVENTION

Embodiments of the present invention provides a method, an apparatus and a system for implementing a mosaic TV service, which enables a terminal to respectively manage each small video preview image in a navigation image.

In order to achieve the above objective, the following technical solutions are provided in the present invention.

A method for implementing a mosaic TV service is provided, which includes:
zooming out a video stream of a TV program of each channel in proportion, to obtain a small video stream corresponding to the TV program of each channel;
multiplexing all the small video streams into at least one set of mosaic TV service streams; and
transmitting the at least one set of multiplexed mosaic TV service streams to a terminal.

A method for implementing a mosaic TV service is provided, which includes:
obtaining at least one set of multiplexed mosaic TV service streams delivered from a front end of a TV program;
demultiplexing at least one small video stream from the mosaic TV service stream;
adjusting an image of the small video stream into a small video preview image of a preset size; and
synthesizing the small video preview image into an image.

An apparatus for implementing a mosaic TV service is provided, which includes:
a video proportional zoom-out module, configured to zoom out a video stream of a TV program of each channel in proportion, to obtain a small video stream corresponding to the TV program of each channel;
a multiplexing module, configured to multiplex all the small video streams into at least one set of mosaic TV service streams; and
a transmitting module, configured to transmit the at least one set of multiplexed mosaic TV service stream to a terminal.

An apparatus for implementing a mosaic TV service is provided, which includes:
a receiving module, configured to obtain at least one set of multiplexed mosaic TV service streams delivered from a front end of a TV program;
a demultiplexing module, configured to demultiplex at least one small video stream from the mosaic TV service stream;
an adjusting module, configured to adjust an image of the small video stream into a small video preview image of a preset size; and
a synthesizing module, configured to synthesize the small video preview image into an image.

A system for implementing a mosaic TV service is provided, which includes:
a front end device, configured to zoom out a video stream of a TV program of each channel in proportion, to obtain a small video stream corresponding to the TV program of each channel, multiplex all the small video streams into at least one set of mosaic TV service streams, and transmit the at least one set of multiplexed mosaic TV service streams to a terminal; and
a user terminal, configured to obtain the at least one set of multiplexed mosaic TV service streams delivered from the front end device, demultiplex at least one small video stream from the mosaic TV service stream, adjust an image of the small video stream into a small video preview image of a preset size, and synthesize the small video preview image into an image.

According to the technical solutions of the present invention, since each small video stream is independent before being multiplexed, the small video stream demultiplexed by the user terminal is also independent, thus achieving the technical effect that the user may adjust each small video stream to manage the small video preview images in the navigation image, and solving the problem in the prior art that the user cannot manage the small video preview images in the navigation image because of being set by the operator front end. Another beneficial effect of the above technical solutions is as follows. Since the standard TV program of each channel is zoomed out in proportion to decrease a code stream of the small video stream, the problem that the number of the small video streams capable of being transmitted by each channel is limited due to the excessively large code stream of the small video stream in the prior art is solved.

### DETAILED DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of a method for implementing a mosaic TV service at a front end according to Embodiment 1 of the present invention;
FIG. 2 is a flow chart of a method for implementing a mosaic TV service at a front end according to Embodiment 2 of the present invention;
FIG. 3 is a flow chart of a method for implementing a mosaic TV service at a terminal according to Embodiment 3 of the present invention;
FIG. 4 is a flow chart of a method for implementing a mosaic TV service at a terminal according to Embodiment 4 of the present invention;
FIG. 5 is a block diagram of an apparatus for implementing a mosaic TV service at a front end according to Embodiment 5 of the present invention;
FIG. 6 is a block diagram of an apparatus for implementing a mosaic TV service at a front end according to Embodiment 6 of the present invention;
FIG. 7 is a block diagram of an apparatus for implementing a mosaic TV service at a terminal according to Embodiment 7 of the present invention;
FIG. 8 is a block diagram of an apparatus for implementing a mosaic TV service at a terminal according to Embodiment 8 of the present invention; and
FIG. 9 is a block diagram of a system for implementing a mosaic TV service according to Embodiment 9 of the present invention.

### DETAILED DESCRIPTION OF THE EMBODIMENTS

The technical solutions of the present invention will be clearly described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

### Embodiment 1

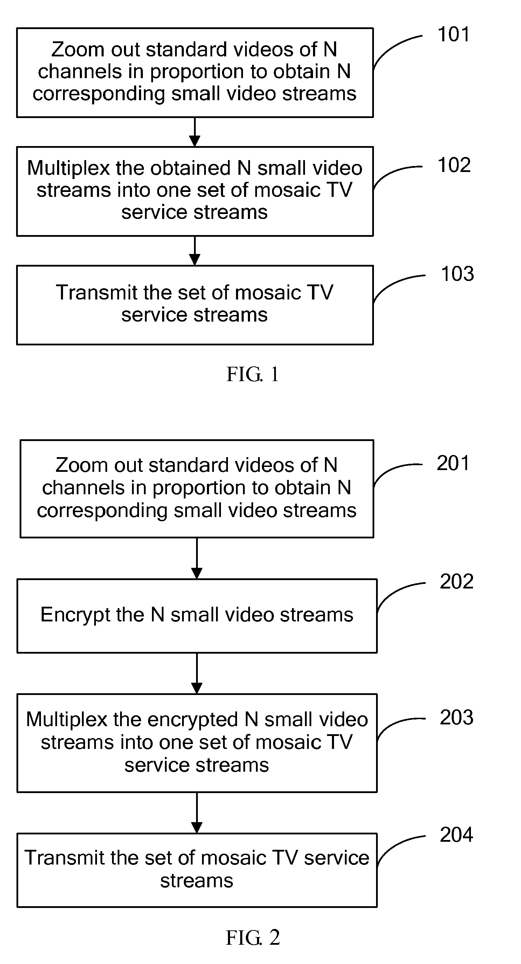

A method for implementing a mosaic TV service is provided, which is executed by an operator front end. As shown in FIG. 1, the method includes the following steps.

In step 101, a video stream of a TV program of each channel, that is, a standard video stream of the TV program regularly watched by a user, is zoomed out in proportion, and various corresponding small video streams are obtained. When the standard TV programs of N (N is a positive integer and N≥2) channels are zoomed out in proportion and are multiplexed into one set for transmission, N small video streams are obtained, and an image of the standard TV program of each channel is zoomed out to 1/N size of the original one.

In step 102, the obtained various small video streams are multiplexed into one set of mosaic TV service streams. If the small video streams are obtained after zooming out the standard TV programs of N channels, the obtained N small video streams are multiplexed into one set of mosaic TV service streams.

The multiplexing into one set of mosaic TV service stream includes: multiplexing the plurality of the obtained small video streams zoomed out in proportion in a standard DVB multiplexing manner into one set of serial mosaic TV service stream.

In step 103, the N small video streams are synthesized into one serial mosaic TV service stream and transmitted to a user terminal.

In the implementation of step 103, generally, the value of N may be set to 40, and when the number of the channels at the operator front end is too large, for example, the number of the channels reaches 80, the TV programs of all the channels need to be divided into two groups, each group includes the TV programs of 40 channels, and each group of the TV programs may be multiplexed into one mosaic TV service stream. The procedure of generating the mosaic TV service stream corresponding to each group of the TV programs is the same as the procedure in FIG. 1 two mosaic TV service streams are finally transmitted to the terminal.

When the number of the channels is too large, the case that multiple mosaic TV service streams are multiplexed occurs, and at this time, various small video streams contained in each mosaic TV service stream are executed according to step 101 in this embodiment.

Compared to the prior art, the method for implementing the mosaic TV service in this embodiment enables more small video streams to be multiplexed into one set of mosaic TV service streams. When the operator front end transmits a plurality of small video streams to the user terminal through the method of this embodiment, since more small video streams are multiplexed into one set of mosaic TV service streams and are transmitted through one channel, the occupied number of the transmission channels is reduced, thus achieving the beneficial effect that the bandwidth is saved.

### Embodiment 2

A method for implementing a mosaic TV service is described in detail in this embodiment.

Referring to FIG. 2, the method for implementing the mosaic TV service is specifically provided, and the method is executed by an operator front end. As shown in FIG. 2, the method includes the following steps.

In step 201, a video stream of a standard TV program enabling a user to normally watch the TV program of each channel is zoomed out in proportion at the operator front end, that is, an image of each standard video is zoomed out in equal proportion and corresponding small video streams are obtained. When the standard TV programs of N (N is a positive integer and N≥2) channels are zoomed out in proportion and are multiplexed into one set for transmission, N small video streams are obtained, and the size of each small video stream is 1/N of the size of the standard TV program (in view of the impact of the program content and the encoder efficiency, the size of the zoomed out small video stream may be around 1/N of the size of the standard TV program).

In the procedure of zooming out the standard TV program of each channel in proportion, the original image content is not cut, but is zoomed out in equal proportion. In comparison with the original standard video, the message data quantity of the image after being zoomed out in proportion is dramatically decreased and the code stream is also dramatically zoomed out accordingly. When N channels are multiplexed into one set for transmission, the standard video image of each channel is zoomed out to 1/N of the original one.

In step 202, the obtained small video streams are respectively encrypted, and if N small video streams are obtained, the N small video streams are encrypted respectively.

Compared with the prior art that the channels to which the user has no viewing authority cannot be encrypted separately, the technical solution that each small video stream may be respectively encrypted in this embodiment achieves the technical effect that the small video preview images corresponding to the channels to which the user has no viewing authority are not displayed.

The encryption of each small video stream may be implemented through the following solutions.
(1) The same encryption algorithm is employed for all the small video streams, and different encryption keys are employed for different small video streams.
(2) Different encryption algorithms are employed for different small video streams.

The encryption algorithms that can be used are as follows: complete encryption algorithm, partial encryption algorithm, Discrete Cosine Transform (DCT) coefficient encryption algorithm, and entropy coding encryption algorithm, and since the specific encryption algorithm is covered in the prior art, the details thereof will not be described herein again.

In step 203, the obtained N small video streams after encryption are synthesized into one set of serial mosaic TV service streams.

Since after each standard TV program is zoomed out in proportion, the code rate is dramatically decreased, and more small video streams are multiplexed into one set of mosaic TV service streams for transmission. For example, a standard TV program is a channel of a Programmable Array Logic (PAL) standard image (720*576 pixels), and after the channel is zoomed out in proportion to a small video stream image (240*192 pixels), the size of the code stream is zoomed out to around 1/9 of the original one (when the impact of the program content and the encoder efficiency of the encoder is considered). If the standard TV program of each channel is replaced by nine small video streams in the aforementioned size for transmission, in the same bandwidth, compared with the solution that the TV programs of the five standard channels are multiplexed in each channel in the prior art, about 40 small video streams are additionally transmitted by each channel through the technical solution of this embodiment (about 9*5=45 small video streams are transmitted).

In step 204, the multiplexed one set of serial mosaic TV service streams is transmitted to a user terminal.

In the implementation of the above procedure, generally, the value of N may be set to 40, and when the number of the channels at the operator front end is too large, for example, the number of the channels reaches 80, the TV programs of all the channels need to be divided into two groups, each group includes the TV programs of 40 channels, and each group of the TV programs may be multiplexed into one set of mosaic TV service streams. The procedure of generating the mosaic TV service stream corresponding to each group of the TV programs is the same as the procedure in FIG. 2 two mosaic TV service streams are finally transmitted to the terminal.

When the number of the channels is too large, the case that multiple mosaic TV service streams are multiplexed occurs, and at this time, various small video streams contained in each mosaic TV service stream are executed according to step 201 in this embodiment.

Through the method for implementing the mosaic TV service in this embodiment, the operator front end zooms out the standard TV program into small video streams in equal proportion, and a code rate of the standard video is decreased, so that more small video streams are multiplexed into one set of mosaic TV service streams. Compared with the prior art, the technical solution of this embodiment ensures that more small video streams are transmitted through one channel. The technical solution that each small video stream is encrypted respectively in this embodiment achieves the beneficial effect that the viewing authority of each channel may be distinguished for the users.

### Embodiment 3

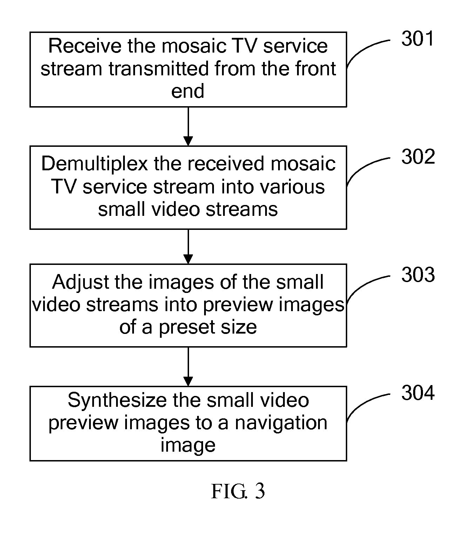

A method for implementing a mosaic TV service is provided, which is executed at a user terminal. As shown in FIG. 3, the method includes the following steps.

In step 301, a user terminal receives a mosaic TV service stream transmitted from an operator front end.

In step 302, the received multiplexed one set of serial mosaic TV service streams is demultiplexed into various small video streams. When the operator front end multiplexes N (N is a positive integer and N≥2) small video streams into one set of mosaic TV service streams, the user terminal may demultiplex N small video streams.

In step 303, the demultiplexed small video stream image is a zoomed out image, and the small video stream image is zoomed out or amplified according to the video proportion, so that the image is a small video preview image of a preset size.

In step 304, the terminal (such as a set-top box or an integrated digital television) includes the following graphic layers: a background layer for displaying a background color, a video layer for displaying a motion picture output from a decoder, a static layer for displaying a static picture, a menu layer for drawing a menu and an interface, and a cursor layer for displaying a cursor. The small video preview image is synthesized with the background layer, the video layer, the static layer, the menu layer, and the cursor layer, and thus a program navigation image including the small video preview images and finally watched by the user is formed.

On the user terminal side, the demultiplexed small video streams may be set by the user according to personal preference, and the setting manner is as follows. The displaying order of the small video streams in the interface is sorted, the layout manner of the small video streams in the interface is adjusted, and a certain corresponding small video stream is separately controlled. The above description is an example of the settings of the user terminal side, other setting or controlling manners may also exist for persons skilled in the art, which are not limited herein.

Through the method for implementing the mosaic TV service in this embodiment, since the technical solution that each small video stream may be independently demultiplexed from the mosaic TV service stream is used, the technical problem that each TV program navigation image is set by the operator front end is solved, thus achieving the beneficial effect that various small video preview images may be managed by the user according to personal preference, and increasing the interactivity at the terminal, so that the user has more sense of participation when watching the programs.

### Embodiment 4

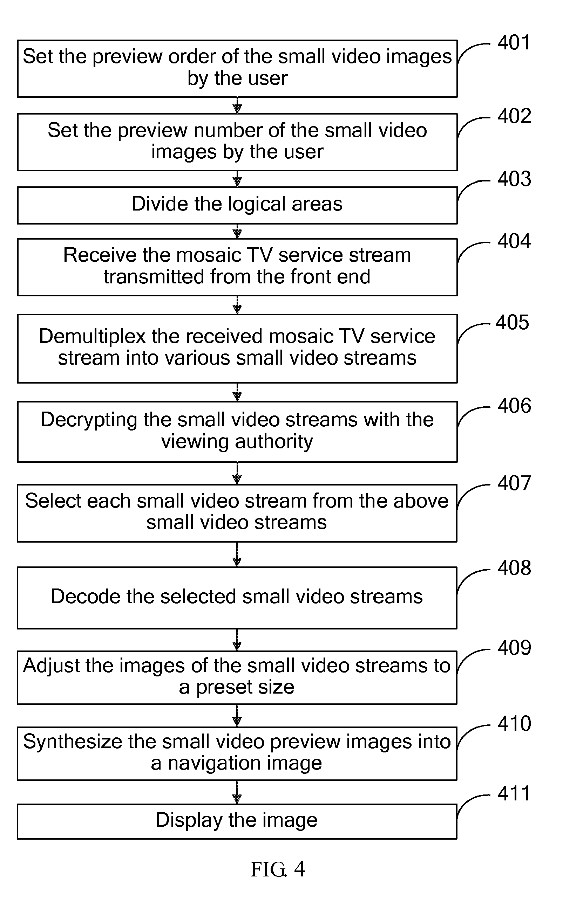

Referring to FIG. 4, a specific method for implementing a mosaic TV service is provided, which is executed at a user terminal as shown in FIG. 4. The method includes the following steps.

In step 401, a user sets an order of small video preview images on each navigation image by adjusting an order of channels in a terminal channel list. If the user does not set the order of the channels, a terminal system may use a default order in the channel list.

In step 402, the user sets the display number of the small video preview images on each navigation image. If the user does not set the display number, the terminal system displays the number of the small video preview images on each navigation image according to a default number.

When the user does not preset the display order and/or the display number of the small video preview images on each navigation image, step 401 and/or step 402 may be omitted, and the terminal system selects to execute with a default order and number.

In step 403, logical areas are divided on the navigation image, and the number of the logical areas is the same as the number of the small video preview images. That is, the number of the logical areas is the same as the number of the small video preview images set by the user and displayed on each navigation image, and is the same as the number of the small video preview images set in the terminal system by default and displayed on each navigation image when the user does not set. The size of the logical area is larger than or equal to the preset size of the small video preview image. Since in the logical area, when a small video preview image is displayed, a corresponding channel name is displayed below the preview image at the same time, and in this case, the size of the divided logical area needs to be larger than the preset size of the small video preview image; while if the corresponding channel name is not displayed, the size of the logical area is equal to the preset size of the small video preview image.

The preset size depends on the number of the small video preview images on each navigation image set by the user in step 402. The terminal system automatically amplifies or zooms out the small video preview image according to the number set by the user, so that the small video preview image is adjusted to the preset size. The adjusting principle is as follows: The display image is equally divided into a preset number, and it is ensured as much as possible that the logical area of each small video preview image may be divided to a maximum extent.

In step 404, the user terminal receives a mosaic TV service stream transmitted from an operator front end.

In step 405, various small video streams are demultiplexed from the received mosaic TV service stream. When the operator front end multiplexes N (N is a positive integer and N≥2) small video streams into one set of mosaic TV service streams, the N small video streams may be demultiplexed from the mosaic TV service stream.

In step 406, in the N demultiplexed small video streams, a small video stream with the viewing authority is decrypted.

Through the decryption process, whether the user has the viewing authority to a standard video of a certain channel may be identified. As for a channel with no viewing authority, the corresponding small video stream cannot be decrypted, thus ensuring that the small video preview image with no viewing authority is not displayed on a display device of the user terminal, and each small video stream capable of being decrypted can be displayed on the display device of the user terminal, so that the user selects and switches to watch a corresponding standard TV program.

Corresponding to step 202 in Embodiment 2, as for the encryption/decryption policy to the small video stream at a network side, the following solutions may be used for the implementation of the decryption of each small video stream at a receiving end.
(1) If the same encryption algorithm is employed for all the small video streams at the network side, different decryption keys are used through the same decryption algorithm on the user terminal side.
(2) If different encryption algorithms are employed for different small video streams on the network side, different decryption algorithms are employed to implement the decryption of the different small video streams on the user terminal side.

In step 407, each small video stream is selected in sequence from the small video streams in step 406 according to the order (which is a channel order set by the user or an order of all the channels set in the terminal system by default) in the channel list in step 401.

Through setting the order of the small video preview images on each navigation image, the user may arrange the favorite channels to the front, so that the small video preview images of the above channels are displayed first on the navigation image, and the user may quickly preview the channels and switch to the favorite TV program.

In step 408, the selected each small video stream is decoded. A rotation decoding time may be set in this embodiment, and after the decoding of the selected small video stream achieves the rotation decoding time, the small video stream of another channel is selected according to the order, so that the small video stream to be displayed in the current page is decoded in turn. The rotation decoding time is the time from demultiplexing to displaying of a small video stream.

In the implementation of the rotation decoding, a plurality of decoders (for example, three decoders) may be employed to decode the plurality of small video streams in turn, and one decoder may also be separately employed to implement the decoding of the small video streams.

In the prior art, the display number of the small video preview images on each navigation image is set by the operator front end, and the user cannot set by himself. Through the technical solution of this embodiment, the objective that the user can manage the display number of the small video preview images is achieved, thus increasing the interactivity of the user terminal.

In step 409, the selected small video preview images are zoomed out or amplified according to the video proportion, so that the images of the small video stream are small video preview images of a preset size.

In step 410, the small video preview images are synthesized with various graphic layers such as a background layer, a video layer, a static layer, a menu layer, and a cursor layer in a set-top box image, to form a navigation image enabling the user to operate and preview. The synthesizing procedure of this embodiment is as follows: The small video preview images having the same number as the logical areas are selected according to the order in the channel list, and the selected small video preview images are synthesized into the corresponding logical areas to form a navigation image.

In step 411, the synthesized navigation image is displayed.

In the procedure of continuously receiving the mosaic TV service stream, the terminal processes and displays the navigation image according to the procedure in FIG. 4 until the user performs the next operation on the current navigation image (for example, selecting a channel and switching to a standard TV program of the channel, browsing the next page, changing the display number of the small video images in the current page, and quitting browsing).

Each small video preview image is moving in the decoding procedure. In the case that the terminal has only one decoder, since the decoder needs to decode the small video streams in turn, the small video preview image corresponding to the small video stream which is being decoded at present is moving. The previously decoded small video preview image remains as the static image of the last frame on the display image. If the terminal has m (m is a positive integer and m≥2) decoders, and m small video streams may be decoded at the same time, the implementation effect is that m moving small video preview images are played on the display image.

Through the above embodiment, since the terminal decodes the small video streams in sequence, it is ensured that the small video preview images of a plurality of channels may also be displayed at the same time in the case that the terminal has only one decoder, and these small video preview images are not static for ever. When the small video preview images set by the user on each navigation image are all displayed, the navigation image updates again, that is, each small video preview image on the navigation image is decoded again in a circular manner, so that the user substantially grasps the playing content of the standard TV program corresponding to the displayed small video preview image.

When the number of the channels at the operator front end is so large that the TV programs of all the channels need to be divided into two groups and each group of the TV programs are multiplexed into one set of mosaic TV service streams, two receiving modules and two demultiplexing modules are set in the terminal in this embodiment, so as to receive and demultiplex the two mosaic TV service streams.

Definitely, in order to save the cost, in the case that multiple mosaic TV service streams exist, only one receiving module may be set in the embodiment of the present invention, and the receiving module receives one mosaic TV service stream by setting a receiving frequency point. However, in the case that the selecting module fails to select the required small video stream, the receiving module needs to change the receiving frequency point to receive other mosaic TV service streams, so that the selecting module may find the desired small video stream.

When the terminal has a plurality of signal receivers and decoders, it is supported that a plurality of small video preview images appointed by the user is displayed in a certain area on the terminal display image at the same time when the user watches the standard TV programs of one or multiple channels in this embodiment.

The following services are also supported in the embodiment of the present invention. 1. The user selects a certain small video preview image by moving a cursor or other picking icons on various small video preview images, thus switching to the corresponding standard TV program for viewing. The corresponding connection between the small video preview image and the video of the standard TV program may be implemented through character matching of the channel name.

Since the small video preview image is still an independent logical unit in the embodiment of the present invention, the set-top box program is allowed to mark or separately process the logical units, and thus the switching between the independent small video stream images is implemented by moving the selecting cursor, thereby switching to the corresponding standard TV program for viewing.
2. A mosaic service describing server is configured at the operator front end, and the mosaic service describing server describes the content associated to each small video preview image. Thus, the small video preview image is allowed to switch to an associated service, a service group, an event, or a message.

Since the small video stream zoomed out by the front end video still allows the mosaic service describing server configured at the front end to describe the small video stream, when the mosaic service describing server is configured at the operator front end, the small video preview image is still allowed to be associated with the related description content.
3. When the operator front end sets that the transmitted small video stream only includes I frames (key frames) to further zoom out the size of the small video stream, since the terminal decoder configured to read the I frames is not changed in the embodiment of the present invention, the case that the small video stream including only I frames is still supported, and the following two processing manners are also supported.

In the first manner, the updating of each small video preview image by the terminal is operated according to a preset time interval, that is, as long as the preset time is reached, no matter how many I frame images are updated on the nth (n is a positive integer) small video preview image, the (n+1)th small video preview image is switched to at once.

In the second manner, after the terminal updates at least one of the I frames according to the fixed number of the I frames on the nth small video preview image, the (n+1)th small video preview image is switched to.

Through the technical solution of this embodiment, the operator front end may encrypt each small video stream respectively, so that the small video preview image corresponding to the TV program to which the user has no viewing authority is not displayed. Moreover, the problem that although the small video preview image corresponding to the TV program to which the user has no viewing authority is displayed, the user fails to switch to the corresponding standard TV program for having no viewing authority after selecting the small video preview image in the prior art is solved.

So far, due to the popularization of the digital TV, more and more TV channels and TV programs emerge. The interactivity and friendliness of the mosaic TV service are favored by more and more users. Through the technical solution described in this embodiment, the requirement that the user manages each small video preview image respectively, and sets the preview order and the display number of the small video preview images according to personal favorite is met, so that the user may quickly browse the favorite channels and switch to the corresponding TV program images, thus increasing the operability and bringing better experience to the user.

### Embodiment 5

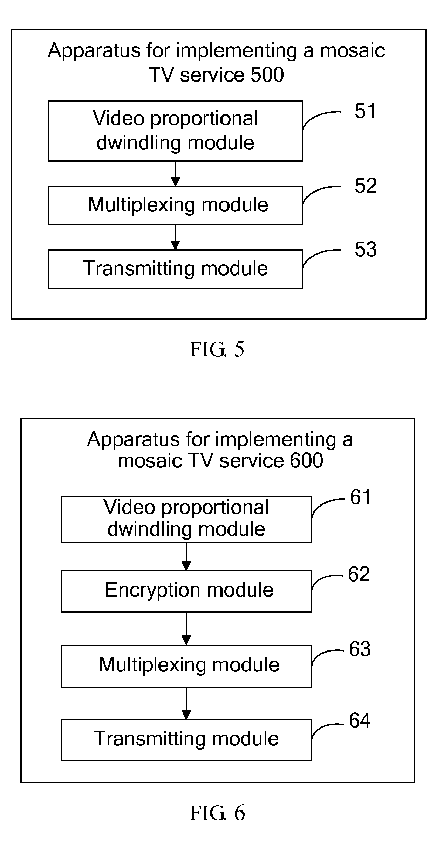

An apparatus 500 for implementing a mosaic TV service is provided in this embodiment, which is deployed at an operator front end. As shown in FIG. 5, the apparatus 500 includes: a video proportional zoom-out module 51, a multiplexing module 52, and a transmitting module 53.

The video proportional zoom-out module 51 is configured to zoom out a video stream of a TV program of each channel in proportion, and obtain a small video stream corresponding to the TV program of each channel. The multiplexing module 52 is configured to multiplex all the obtained small video streams into one set of mosaic TV service streams. The transmitting module 53 is configured to transmit the at least one set of multiplexed mosaic TV service streams to a user terminal.

Compared with the mosaic TV generator used by the operator front end in the prior art, the apparatus provided in this embodiment is simpler. Moreover, the apparatus of this embodiment is compatible with the existing TV operating system, so that little modification is to be performed on the existing cable TV operating system, and no impact will be caused to the current operating project.

### Embodiment 6

An apparatus 600 for implementing a mosaic TV service is provided in this embodiment, which is deployed at an operator front end, so as to facilitate the implementation of the mosaic TV service at the operator front end. As shown in FIG. 6, the apparatus 600 includes: a video proportional zoom-out module 61, an encryption module 62, a multiplexing module 63 and a transmitting module 64.

The video proportional zoom-out module 61 is configured to zoom out a video stream of a TV program of each channel at the operator front end in proportion, and obtain a small video stream corresponding to the TV program of each channel. The encryption module 62 is configured to encrypt each small video stream obtained by the video proportional zoom-out module 61 respectively. The multiplexing module 63 is configured to multiplex all the obtained small video streams into one set of mosaic TV service streams. The transmitting module 64 is configured to transmit the at least one set of multiplexed mosaic TV service streams to a user terminal. The small video stream in the mosaic TV service stream transmitted to the user terminal is an encrypted small video stream.

The encryption of each small video stream by the encryption module 62 may be implemented through the following solutions.
(1) The same encryption algorithm is employed for all the small video streams, and different encryption keys are employed for different small video streams.
(2) Different encryption algorithms are employed for different small video streams.

The encryption algorithms that can be used are as follows: complete encryption algorithm, partial encryption algorithm, DCT coefficient encryption algorithm, and entropy coding encryption algorithm, and since the specific encryption algorithm is covered in the prior art, the details thereof will not be described herein again.

By deploying a simple apparatus at the operator front end in the method for implementing the mosaic TV service according to the above technical solution, the user terminal provides a mosaic TV service viewing experience for the user without adding any hardware. Thus, the condition in the prior art that a complex mosaic TV generator needs to be deployed at the operator front end is eliminated.

### Embodiment 7

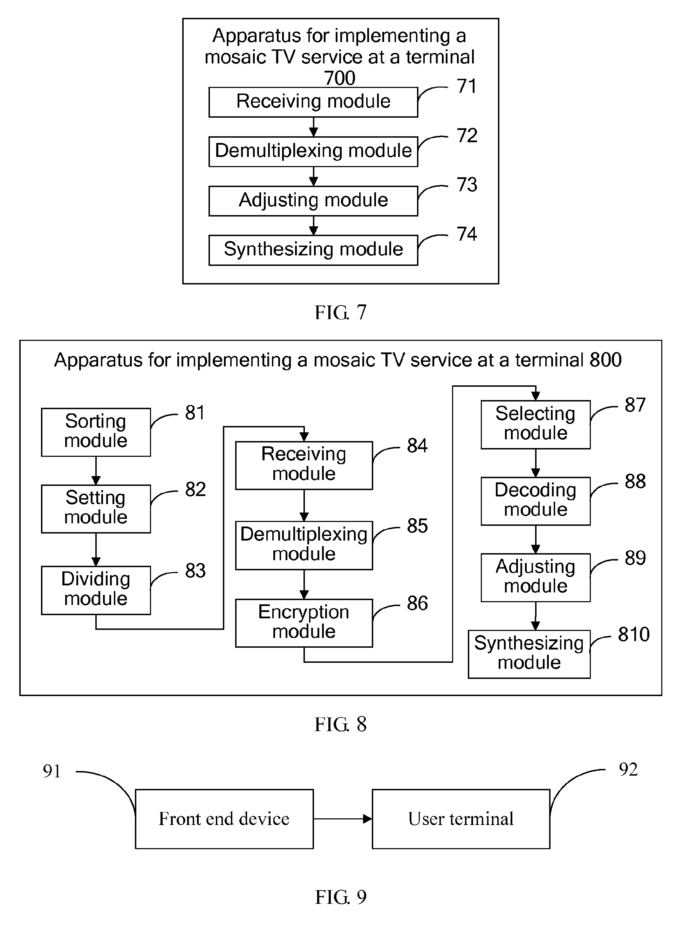

An apparatus 700 for implementing a mosaic TV service at a terminal is provided in this embodiment, which is deployed at a user terminal to better serve the user. As shown in FIG. 7, the apparatus 700 includes: a receiving module 71, a demultiplexing module 72, an adjusting module 73, and a synthesizing module 74.

At the user terminal, the receiving module 71 is configured to receive a mosaic TV service stream transmitted from an operator front end; the demultiplexing module 72 is configured to demultiplex various small video streams from the mosaic TV service stream, and demultiplex N small video streams when the operator front end multiplexes N (N in a positive integer and N≥2) small video streams into one set of mosaic TV service streams; the adjusting module 73 is configured to adjust the images of the demultiplexed small video streams into small video preview images of a preset size; and the synthesizing module 74 is configured to synthesize the small video stream images adjusted by the adjusting module 73 with various graphic layers of a user terminal device (for example, a set-top box), so as to eventually form a program navigation image including the small video preview images.

The apparatus for implementing the mosaic TV service in this embodiment is realized by adding a software module at the terminal, thus achieving the beneficial effect that little modification is to be performed on the user terminal system, and no impact will be caused to the existing user terminal.

### Embodiment 8

An apparatus 800 for implementing a mosaic TV service at a terminal is provided in this embodiment, which facilitates the implementation of the mosaic TV service at a user terminal. As shown in FIG. 8, the apparatus 800 includes: a sorting module 81, a setting module 82, a dividing module 83, a receiving module 84, a demultiplexing module 85, a decryption module 86, a selecting module 87, a decoding module 88, an adjusting module 89, and a synthesizing module 810.

The sorting module 81 is configured to sort channels corresponding to small video streams with the viewing authority; the setting module 82 is configured to set the display number of the small video preview images in each image. The dividing module 83 is configured to divide logical areas on the image, in which the number of the divided logical areas is the same as the number set by the setting module 82, and the size of the divided logical areas is larger than or equal to the preset size of the small video preview images. The receiving module 84 is configured to receive a mosaic TV service stream transmitted from the operator front end. The demultiplexing module 85 is configured to demultiplex various TV service streams from the received mosaic TV service stream. The decryption module 86 is configured to decrypt the small video streams with the viewing authority. The selecting module 87 is configured to select each small video stream from the decrypted small video streams in sequence according to the order sorted by the sorting module 81. The decoding module 88 is configured to decode each selected small video stream. The adjusting module 89 is configured to adjust the images of the decoded small video streams into small video preview images of a preset size. The synthesizing module 810 is configured to synthesize the small video preview images with the various graphic layers of a user terminal device (for example, a set-top box), so as to eventually form a program navigation image including the small video preview images.

The encryption of each small video stream by the encryption module 62 may be implemented through the following solutions.
(1) The same encryption algorithm is employed for all the small video streams, and different encryption keys are employed for different small video streams.
(2) Different encryption algorithms are employed for different small video streams.

The encryption algorithms that can be used are as follows: complete encryption algorithm, partial encryption algorithm, DCT coefficient encryption algorithm, and entropy coding encryption algorithm, and since the specific encryption algorithm is covered in the prior art, the details thereof will not be described herein again.

In addition, in the specific implementation, the operation executed by the synthesizing module 810 is as follows: selecting the small video preview images having the same number as the logic areas divided by the dividing module 83 according to the order sorted by the sorting module 81; and synthesizing the selected small video preview images into the corresponding logical areas to form an image.

The apparatus for implementing the mosaic TV service provided in this embodiment facilitates the implementation of the mosaic TV service at a user terminal. The apparatus is realized by adding a software module at the terminal, thus achieving the beneficial effect that little modification is to be performed on the user terminal system, and no impact will be caused to the existing user terminal.

### Embodiment 9

A system for implementing a mosaic TV service is provided in this embodiment. As shown in FIG. 9, the system includes: a front end device 91 and a user terminal 92.

The front end device 91 is configured to zoom out a video stream of a TV program of each channel in proportion, and obtain a small video stream corresponding to the TV program of each channel. If the video streams of the standard TV programs ofN channels (N is a positive integer and N≥2) are zoomed out in proportion, N corresponding small video streams are obtained. The obtained N small video streams are multiplexed into at least one set of mosaic TV service streams, and the at least one set of multiplexed mosaic TV service streams is transmitted to a terminal. The user terminal 92 is configured to obtain the at least one set of multiplexed mosaic TV service streams delivered from the front end device, demultiplex at least one small video stream from the mosaic TV service stream, and adjust an image of the small video stream into a small video preview image of a preset size and synthesize the small video preview image into an image.

The front end device 91 is further configured to encrypt the obtained small video stream corresponding to the TV program of each channel, and the small video stream of the at least one set of multiplexed mosaic TV service streams is an encrypted small video stream. The user terminal 92 is further configured to decrypt the small video stream with the viewing authority.

The embodiments of the present invention are mainly applied in a unidirectional cable TV technical network and are also applicable to a transmission implementing procedure in a bi-directional cable TV technical network. The application procedure of the embodiment of the present invention in the bi-directional cable TV technical network is as follows: The user terminal transmits a mosaic TV preview request to the operator terminal, and the operator terminal executes according to the method for implementing the mosaic TV service in the above embodiments after receiving the request from the user. With the development of the technology, the embodiments of the present invention may be derivative to an interactive network TV system or other TV broadcast systems, or may be applied in similar or close technical fields.

Through the above description of the embodiments, it is apparent to persons skilled in the art that the present invention may be accomplished through software plus a necessary universal hardware platform or through hardware, and in most cases, the former is more preferred. Based on this, the technical solutions of the present invention may be embodied in the form of a software product. The software product may be stored in a readable storage medium such as a floppy disk, a hard disk, or an optical disk, and contain several instructions to instruct equipment (for example, a digital TV or an operator server) to perform the method according to the embodiments of the present invention.

The above descriptions are merely some exemplary embodiments of the present invention, but the protection scope of the present invention is not limited thereto. Any modification, equivalent replacement, or improvement made by persons skilled in the art without departing from the spirit and principle of the present invention should fall within the protection scope of the present invention. Therefore, the protection scope of the present invention is subject to the protection scope of the claims.

## Claims

1. A method for implementing a mosaic TV service, comprising:
zooming out an image size of a video for a video stream of a TV program of each channel in proportion, to obtain a small video stream corresponding to the TV program of each channel;
multiplexing all the small video streams into at least one set of mosaic TV service streams; and
transmitting the at least one set of multiplexed mosaic TV service streams to a terminal.

2. The method for implementing the mosaic TV service according to claim 1, wherein before the multiplexing all the small video streams into the at least one set of mosaic TV service streams, the method further comprises: encrypting the small video streams respectively, wherein
the small video streams that are multiplexed into the at least one set of mosaic TV service streams are encrypted small video streams.

3. A method for implementing a mosaic TV service, comprising:
obtaining at least one set of multiplexed mosaic TV service stream delivered from a front end of a TV program system;
demultiplexing at least one set of small video stream from the mosaic TV service stream;
adjusting an image of the small video stream into a small video preview image of a preset size; and
synthesizing the small video preview image into an image.

4. The method for implementing the mosaic TV service according to claim 3, wherein before the adjusting the image of the small video stream into small video preview image of the preset size, the method further comprises:
setting the number of small video preview images in each image; and
dividing logical areas on the image, wherein the number of the logical areas is the same as the number of the small video preview images, and the size of the logical areas is larger than or equal to the preset size of the small video preview images; and
the synthesizing the small video preview image into the image comprises: synthesizing a small video preview image into the logical areas respectively on the image.

5. The method for implementing the mosaic TV service according to claim 3, wherein before the adjusting the image of the small video stream into the small video preview image of the preset size, the method further comprises:
sorting channels corresponding to all the demultiplexed small video streams; and
the synthesizing the small video preview image into the image comprises: synthesizing the small video preview image into the image according to the sort order.

6. The method for implementing the mosaic TV service according to claim 3, wherein before the adjusting the image of the small video stream into small video preview image of the preset size, the method further comprises:
sorting channels corresponding to all the demultiplexed small video streams;
setting the number of small video preview images in each image; and
dividing logical areas on the image, wherein the number of the logical areas is the same as the number of the small video preview images, and the size of the logical areas is larger than or equal to the preset size of the small video preview images; and
the synthesizing the small video preview image into the image comprises: determining the logical areas corresponding to the small video preview images on the image according to the sort order; and synthesizing the small video preview images into the corresponding logical areas.

7. The method for implementing the mosaic TV service according to claim 3, wherein before the adjusting the image of the small video stream into small video preview image of the preset size, the method further comprises:
selecting each small video stream in sequence from all the demultiplexed small video streams; and
decoding the selected small video streams.

8. The method for implementing the mosaic TV service according to claim 7, wherein before the selecting each small video stream in sequence from all the demultiplexed small video streams, the method further comprises:
decrypting the small video streams with a viewing authority, wherein the selected small video streams are decrypted small video streams.

9. An apparatus for implementing a mosaic TV service, comprising:
a video proportional zoom-out module, configured to zoom out a video stream of a TV program of each channel in proportion, to obtain a small video stream corresponding to the TV program of each channel;
a multiplexing module, configured to multiplex all the small video streams into at least one set of mosaic TV service streams; and
a transmitting module, configured to transmit the at least one set of multiplexed mosaic TV service streams to a terminal.

10. The apparatus for implementing the mosaic TV service according to claim 9, further comprising:
an encryption module, configured to encrypt the small video streams obtained by the video proportional zoom-out module, wherein the small video streams that are multiplexed into the at least one set of mosaic TV service streams are encrypted small video streams.

11. An apparatus for implementing a mosaic TV service, comprising:
a receiving module, configured to obtain at least one set of multiplexed mosaic TV service streams delivered from a front end of a TV program;
a demultiplexing module, configured to demultiplex at least one set of small video streams from the mosaic TV service stream;
an adjusting module, configured to adjust an image of the small video stream into a small video preview image of a preset size; and
a synthesizing module, configured to synthesize the small video preview image into an image.

12. The apparatus for implementing the mosaic TV service according to claim 11, further comprising:
a sorting module, configured to sort channels corresponding to all the demultiplexed small video streams;
a setting module, configured to set the number of the small video preview images in each image; and
a dividing module, configured to divide logical areas on the image, wherein the number of the logical areas is the same as the number of the small video preview images set by the setting module, and the size of the logical areas is larger than or equal to the preset size of the small video preview images,
wherein the synthesizing module determines the logical areas corresponding to the small video preview images on the image according to the sort order of the sorting module, and synthesizes the small video preview images into the corresponding logical areas.

13. The apparatus for implementing the mosaic TV service according to claim 11, further comprising:
a selecting module, configured to select each small video stream in sequence from all the demultiplexed small video streams; and
a decoding module, configured to decode the selected small video streams.

14. The apparatus for implementing the mosaic TV service according to claim 13, further comprising:
a decryption module, configured to decrypt the small video streams with a viewing authority, wherein the small video streams selected by the selecting module are decrypted small video streams.

15. A system for implementing a mosaic TV service, comprising:
a front end device, configured to zoom out a video stream of a TV program of each channel in proportion, to obtain a small video stream corresponding to the TV program of each channel, multiplex all the small video streams into at least one set of mosaic TV service streams, and transmit the at least one set of multiplexed mosaic TV service streams to a terminal; and
a user terminal, configured to obtain the at least one set of multiplexed mosaic TV service streams delivered from the front end device, demultiplex at least one small video stream from the mosaic TV service stream, adjust an image of the small video stream into a small video preview image of a preset size, and synthesize the small video preview image into an image.
